# EUROPEAN PATENT SPECIFICATION

(11) **EP 4 011 233 B1**
(45) Date of publication and mention of the grant of the patent: **04.09.2024**
(21) Application number: 20849273.6
(22) Date of filing: 30.07.2020
(51) Int. Cl.: A43B 23/04, A43B 3/14, A43B 13/04, A43B 1/10, B29D 35/02, A43B 3/16

(54) **FOOTWEAR AND METHOD FOR MANUFACTURE THEREOF**
SCHUHWERK UND VERFAHREN ZUR HERSTELLUNG DAVON
ARTICLE CHAUSSANT ET SON PROCÉDÉ DE FABRICATION

(30) Priority: 06.08.2019 JP 2019144589
(43) Date of publication of application: 15.06.2022
(73) Proprietor: Global Shoes Research Ltd., Tokyo 111-0022 (JP)
(72) Inventor: TAKEGAHARA, Toshinosuke, Tokyo 111-0022 (JP)
(74) Representative: Strehl Schübel-Hopf & Partner
(86) International application number: PCT/JP2020/029222
(87) International publication number: WO 2021/024901

(56) References cited:
- JP-A- 2001 299 401
- JP-A- 2013 090 919
- JP-A- H08 228 805
- JP-U- S 537 250
- US-A1- 2017 311 675
- US-A1- 2018 168 283

## Description

### TECHNICAL FIELD

The present invention relates to a footwear and a method for manufacturing the same.

### BACKGROUND ART

Sandals placed outdoor, such as a veranda and a garden, get wet in rain or dust attaches to the sandals to get dirty. In view of this, each time the sandals are worn, inside of the sandals needs to be dried or wiped with, for example, a dustcloth, which is troublesome. Use of a storage box and a cover case storing the sandals to avoid attachment of rain and dust beforehand is considered. However, in this case, in addition to a location to place the storage box or the like being required, housing and taking out the sandals are troublesome.

Therefore, the following Patent Literature 1 proposes a configuration of standing sandals with which, without use of a storage box or the like, wet and dirt of an inside of the sandals due to rain and dust are avoided beforehand, and thus a labor, such as wiping and drying, is unnecessary.

### CITATION LIST

### PATENT LITERATURE

Patent Literature 1: Japanese Unexamined Patent Application Publication No. 2013-90919.

US 2017/311675 A1 discloses sandals configured to protect the feet from water splashes, puddles, wet grass and wind.

### SUMMARY OF THE INVENTION

### PROBLEMS TO BE SOLVED BY THE INVENTION

However, even when the above-described standing sandals are stood and placed, inner surfaces, which are surfaces in contact with feet of a person who wears the sandals, are remained to be exposed. In view of this, completely avoiding dirt of the inner surfaces of the sandals caused by, for example, wet due to, for example, rain and attachment of dust is difficult. That is, especially, under the condition where a side wind blows from opening sides of the sandals that are stood and placed, the above-described standing sandals have a possibility of getting wet or dirty of the surfaces (especially regions of heel parts) in contact with the feet of the person who wears the sandals.

In consideration of the above-described points, an object of the present invention is to provide a footwear in which wet and dirt of surfaces in contact with feet of a person who wears the footwear is further reliably avoided even when the footwear is placed outdoor without use of a storage box or the like, and a labor of wiping and drying the surfaces is unnecessary, and a method for manufacturing the footwear.

### SOLUTION TO THE PROBLEMS

The present invention is a footwear for wrapping an entire foot. The footwear includes a main body and an embedded part made of synthetic rubber.

The main body is made of foam rubber. The main body is dug to embed synthetic rubber into a heel side of a bottom of the main body made of the foam rubber. The embedded part is a part from a mid-point from a toe to a heel to a heel part of the bottom of the main body. Specific gravities of the foam rubber and the synthetic rubber are 0.38 g/cm³ and 1.03 g/cm³, respectively. A center of gravity of the footwear is shifted to the heel side using a difference in the specific gravity of both to increase stability such that the footwear does not fall over when the footwear is placed upside down. An opening of the footwear is further formed to be flat with respect to a ground surface when the footwear is placed upside down.

Further, the opening of the footwear may have a width in a right-left direction widened more than a width in a direction perpendicular to the right-left direction for stabilization against a side wind received by a side surface of the footwear. The synthetic rubber may be embossed for a slip resistance.

The present invention is a method for manufacturing the footwear that wraps an entire foot and is allowed to be placed upside down to avoid an inside of the footwear to get dirty with rain and dust. The method includes: a step of manufacturing the footwear having an opening with a flat shape with foam rubber having a specific gravity of 0.38 g/cm³; a step of subsequently digging a part from a mid-point from a toe to a heel to a heel part as a part of a bottom of the footwear manufactured with the foam rubber; and a step of subsequently fitting synthetic rubber having a specific gravity of 1.03 g/cm³ in a dug groove. A center of gravity of the footwear is set in a heel side using a difference in the specific gravity.

### EFFECTS OF THE INVENTION

With the footwear of the present invention, since the opening is formed to be flat with respect to the ground surface and the center of gravity is positioned on the heel side, by placing the footwear upside down, the footwear can be placed in a stable posture so as to close the opening. Accordingly, according to the present invention, the footwear in which wet and dirt of an inner surface is reliably avoided beforehand and a labor, such as wiping and drying the inner surface each time the footwear is used, is unnecessary by only placing the footwear upside down can be provided. Additionally, the footwear can be easily manufactured.

### BRIEF DESCRIPTION OF THE DRAWINGS

Fig. 1 illustrates an example of a footwear according to an embodiment, Fig. 1(a) is a perspective view, and Fig. 1(b) is a drawing illustrating an example of a use state of the footwear according to claimed invention.
Fig. 2 illustrates the footwear in Fig. 1, Fig. 2(a) is a plan view, Fig. 2(b) is a cross-sectional view along the line A-A in Fig. 2(a), and Fig. 2(c) is a bottom view.
Fig. 3 illustrates the footwear in Fig. 1, Fig. 3(a) is a perspective view, and Fig. 3(b) is a side view illustrating the footwear placed upside down.
Fig. 4 illustrates the main part of the footwear in Fig. 1, Fig. 4(a) is a perspective view, and Fig. 4(b) is a plan view.
Fig. 5 is a flowchart depicting an example of a manufacturing process of the footwear in Fig. 1 according to claimed invention.
Fig. 6 is a drawing for describing a part of steps of the manufacturing process of the footwear in Fig. 1 according to claimed invention.
Fig. 7 is a plan view illustrating a modification according to claimed invention.
Fig. 8 is a cross-sectional view illustrating a modification according to claimed invention.
Fig. 9 is a drawing illustrating a modification according to claimed invention.

### DESCRIPTION OF THE EMBODIMENTS

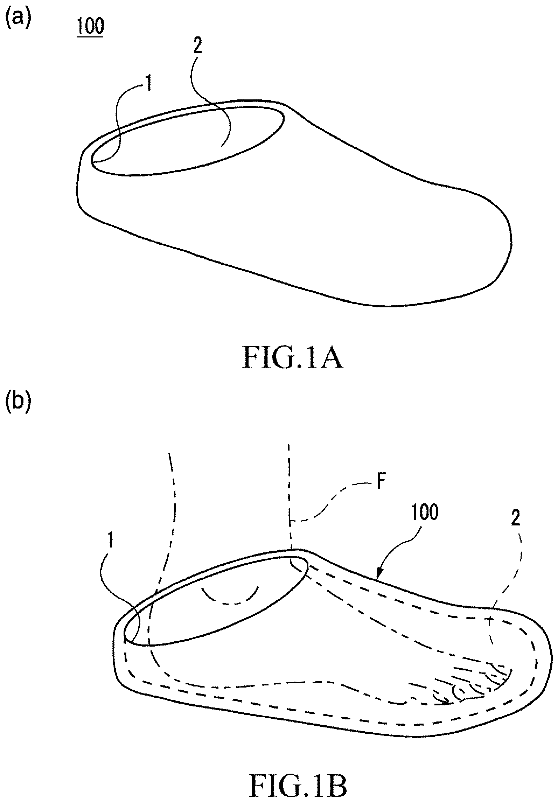

The following describes embodiments of the present invention with reference to the drawings. Note that the present invention is not limited to these embodiments. In addition, the drawings include parts expressed by appropriately changing scales, for example, partially enlarged or highlighted. The drawings illustrate only one of footwears used as a left and right pair. Since the other one has a similar configuration, the illustration is omitted. Fig. 1 illustrates an example of a footwear 100 according to an embodiment, Fig. 1(a) is a perspective view, and Fig. 1(b) is a drawing illustrating an example of a use state of the footwear.

The footwear 100 is a footwear used when, for example, a person goes outdoor. As illustrated in Fig. 1(a), the footwear 100 includes an opening 1 and an internal space 2 that houses a foot F of the person. For example, the person who is in bare feet or wears socks directly wears the footwear 100 for use, and as illustrated in Fig. 1(b), the footwear 100 is used with the entire foot F of the person wrapped. Similarly to general sandals or the like, the footwear 100 is assumed to be used when the person does not go for outing, such as going to a veranda and going to a garden from a back door, and to be placed upside down at an outdoor location, such as a doorway of a veranda and outside a back door, while not used. Note that the footwear 100 in Fig. 1 is for a right foot, a footwear for a left foot (not illustrated) paired to the footwear 100 also has the configuration similar to the footwear 100, and, for example, configured to be symmetrical to the footwear 100.

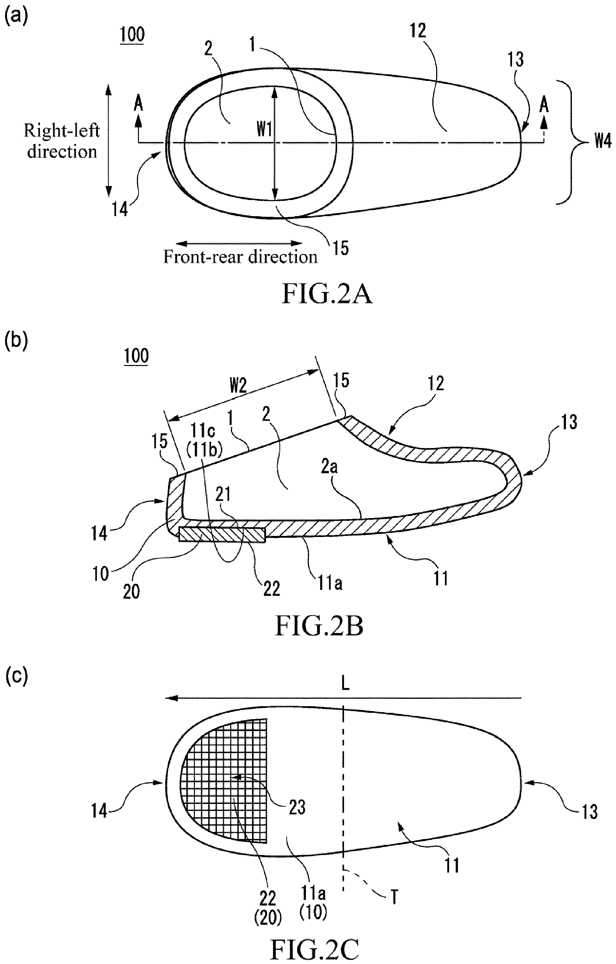

Fig. 2 illustrates the footwear 100 in Fig. 1, Fig. 2(a) is a plan view, Fig. 2(b) is a cross-sectional view along the line A-A in Fig. 2(a), and Fig. 2(c) is a bottom view. As illustrated in Fig. 2, the footwear 100 is constituted including a foam rubber portion 10 made of foam rubber and a synthetic rubber portion 20 made of synthetic rubber.

The foam rubber portion 10 forms a shape of the footwear, and constitutes the main part of the footwear 100. As described above, the foam rubber portion 10 includes the opening 1 and the internal space 2, and includes a bottom portion 11 as a part of a bottom of the footwear 100, an upper portion 12 as a part of an upper of the footwear 100, a toe portion 13 as a part of a toe of the footwear 100, and a heel portion 14 as a part of a heel of the footwear 100 constituting them.

The opening 1 is formed such that the foot F of the person can be inserted into and removed from the internal space 2. A width W1 in a right-left direction of the opening 1 is configured to be smaller (shorter) than a width W2 in a direction perpendicular to the width W1 direction.

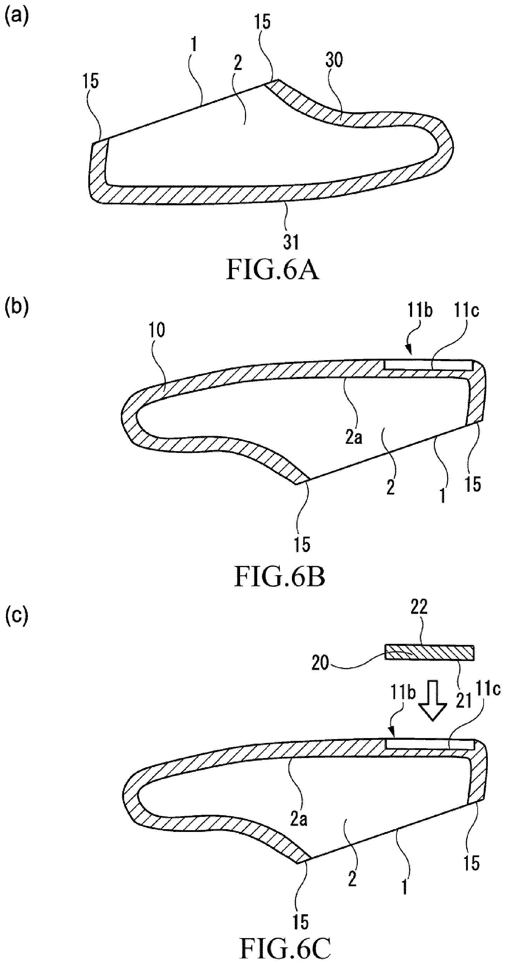

In a lower surface 11a of the bottom portion 11, a depressed portion 11b in which a part of a region is depressed is formed (see Fig. 6(b)). The depressed portion 11b is formed such that the synthetic rubber portion 20 can be disposed inside, and has a predetermined depth. Accordingly, the formation region of the depressed portion 11b in the lower surface 11a of the bottom portion 11 and the shape and the depth of the depressed portion 11b are formed according to the position in the lower surface 11a of the synthetic rubber portion 20 and the shape and the thickness of the synthetic rubber portion 20. The depressed portion 11b in Fig. 2 is formed in the region on the heel portion 14 side of the lower surface 11a in a direction L from the toe portion 13 side toward the heel portion 14 side. The depressed portion 11b is formed to have an approximately semicircular shape having a linear part on the toe portion 13 side and an arc part on the heel portion 14 side so as to match the shape of the synthetic rubber portion 20 described later.

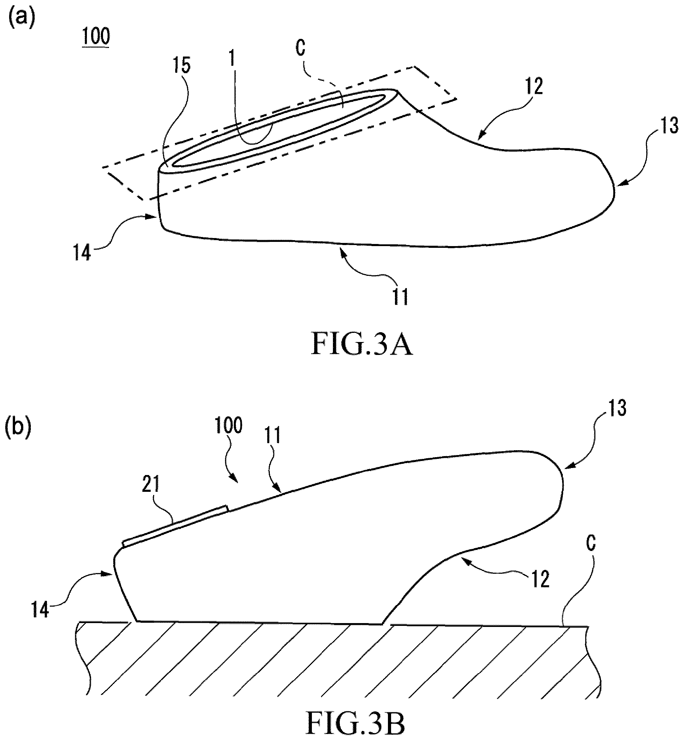

Fig. 3 illustrates the footwear 100, Fig. 3(a) is a drawing when the footwear 100 is viewed in the slightly oblique direction, and Fig. 3(b) is a side view illustrating a state of placing the footwear 100 upside down. As illustrated in Fig. 3, an end surface (an opening end surface) 15 of the opening 1 abuts on a placed surface C when the footwear 100 is placed upside down, and thus the opening end surface 15 is formed to ensure stably supporting the entire footwear 100. When the footwear 100 is placed upside down, the opening end surface 15 entirely abuts on the surface C. In this state, the toe portion 13 of the footwear 100 is stabilized while a predetermined interval is held with respect to the surface C. Note that in this Description, the surface C when the footwear 100 is placed upside down is defined and used as a "ground surface." The ground surface C is mainly a ground, but includes, for example, a veranda floor. The specific configuration of the opening end surface 15 is as follows.

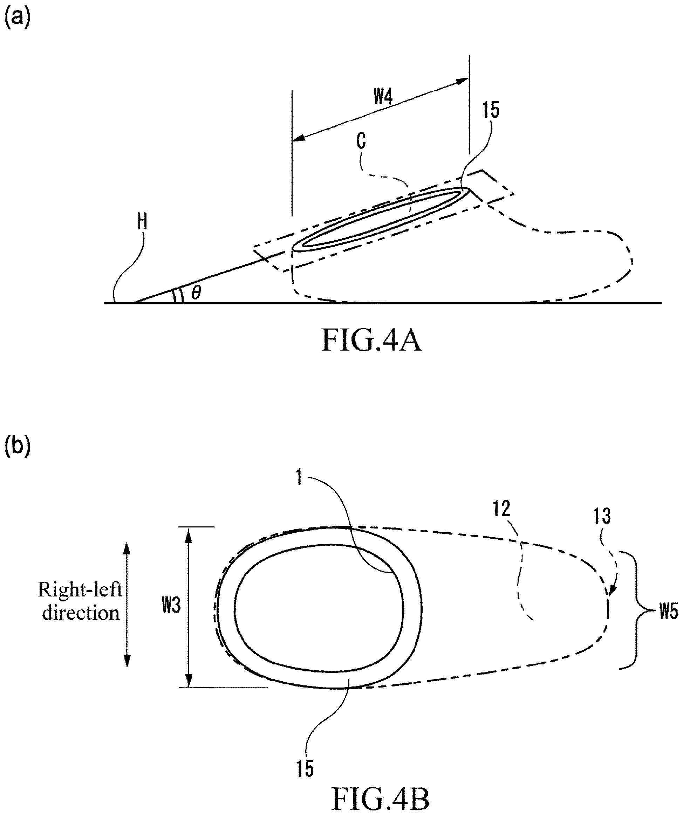

As described above, the opening end surface 15 is a plane formed to entirely abut on the ground surface C. That is, the opening end surface 15 is flush with and parallel to the plane equivalent to the ground surface C. Fig. 4(a) illustrates the opening end surface 15 of the footwear 100 and is a drawing when the footwear 100 is viewed in the slightly oblique direction. When the footwear 100 is placed similarly to a general footwear (that is, when the footwear 100 is placed while the upper portion 12 faces upward and the bottom portion 11 faces downward), as illustrated in Fig. 4(a), the opening end surface 15 is inclined with respect to a horizontal surface H to gradually rise from the heel portion 14 side toward the upper portion 12 side. In view of this, when the footwear 100 is placed upside down, compared with a case of the opening end surface 15 being a horizontal surface, the position of the center of gravity of the footwear 100 moves in a direction from the toe portion 13 side toward the heel portion 14 side. Accordingly, the opening end surface 15 having the inclined surface improves the stability of the footwear 100 placed upside down and avoids the upside-down footwear 100 to fall over toward the toe portion 13 side.

An angle (an inclined angle) θ formed by the horizontal surface H and the opening end surface 15 is configured according to, for example, the shapes and the weights of the toe portion 13 and the upper portion 12. However, when the angle θ is a comparatively small and the inclination is gentle (for example, the angle θ of less than 10°), the meaningful effect brought by the inclination cannot be obtained, and the footwear 100 placed upside down is likely to fall over toward the toe portion 13 side and therefore is unstable. On the other hand, when the angle θ is comparatively large and the inclination is steep (for example, the angle θ in excess of 30°), the rise of the position of the center of gravity of the upside-down footwear 100 makes the footwear 100 unstable conversely. That is, in this case, the problem of the decrease in stability caused by the upward movement of the position of the center of gravity is more serious than the effect brought by moving the position of the center of gravity of the footwear 100 placed upside down in the direction from the toe portion 13 side toward the heel portion 14 side. Therefore, the angle θ is set to, for example, from 10° to 30°. In this case, while the decrease in stability caused by the rise of the position of the center of gravity of the upside-down footwear 100 is suppressed, the meaningful effect brought by the inclination can be provided. Note that when the footwear 100 is placed similarly to a general footwear, the opening end surface 15 is not limited to be the plane inclined with respect to the horizontal surface H, and may be a plane parallel to the horizontal surface H.

Fig. 4(b) is a plan view illustrating the opening end surface 15. As illustrated in Fig. 4(b), the opening end surface 15 has an approximately circular ring shape region formed along the opening 1 at a predetermined width. This disperses the contact surface between the opening end surface 15 of the footwear 100 placed upside down and the ground surface C in a balanced manner, and ensuring the contacted area stably supports the upside-down footwear 100.

Additionally, a width W3 in the right-left direction of the opening end surface 15 is configured smaller (narrower) than a width W4 (see Fig. 4(a)) in a direction perpendicular to the width W3 direction. That is, the width W4 is configured to be larger (wider) than the width W3 in the right-left direction. Additionally, the width W3 in the right-left direction of the opening end surface 15 is configured to be larger (wider) than a width W5 in the right-left direction of the upper portion 12 and the toe portion 13. This configuration further reliably avoids the upside-down footwear 100 to fall over toward the toe portion 13 side.

The foam rubber portion 10 is integrally formed by foam rubber. The foam rubber constituting the foam rubber portion 10 is rubber containing soft foam and soft rubber internally having many voids. As the soft rubber, for example, ethylene vinyl acetate rubber, polyethylene rubber, or silicon rubber is used. A specific gravity of the foam rubber portion 10 is set to be 0.38 g/cm³.

Referring again to Fig. 2(b), the synthetic rubber portion 20 is disposed on the bottom surface (the surface on the lower side) of the footwear 100 in a state where a part of the synthetic rubber portion 20 is housed in the depressed portion 11b so as to be fitted to the depressed portion 11b. The synthetic rubber portion 20 is disposed in the region on the heel portion 14 side in the direction L from the toe portion 13 side toward the heel portion 14 side on the lower surface 11a of the foam rubber portion 10. That is, the position where the synthetic rubber portion 20 is disposed on the lower surface 11a of the foam rubber portion 10 is the position on the heel portion 14 side with respect to a position of a center T (see Fig. 2(c)) between the heel portion 14 and the toe portion 13.

The synthetic rubber portion 20 is a plate-shaped member that is approximately parallel to the bottom surface of the footwear 100, and has a top surface 21, which is the main surface, as a joined surface joined to a bottom surface 11c of the depressed portion 11b. The synthetic rubber portion 20 has a thickness configured slightly larger (slightly longer) than the depth of the depressed portion 11b. In view of this, in the footwear 100, a lower surface (the main surface on the side opposite to the top surface 21) 22 of the synthetic rubber portion 20 slightly projects downward from the lower surface 11a of the foam rubber portion 10. The lower surface 22 of the synthetic rubber portion 20 constitutes the bottom surface of the footwear 100 together with the lower surface 11a of the foam rubber portion 10. The synthetic rubber portion 20 is not limited to have the plate shape, and may have, for example, a block shape and a film shape.

As illustrated in Fig. 2(c), the synthetic rubber portion 20 is formed in an approximately semicircular shape having a linear part on the toe portion 13 side and an arc part on the heel portion 14 side. The lower surface 22 of the synthetic rubber portion 20 is embossed, and the lower surface 22 has a plurality of grid-like projecting portions 23 formed so as to appear on the lower surface 22 by embossing process. The projecting portions 23 make the lower surface 22 of the synthetic rubber portion 20 less likely to slip. Note that the projecting portions 23 formed so as to appear on the lower surface 22 by embossing process is not limited to have the grid pattern, and any shape may be used. For example, the projecting portions 23 may have a shape of a plurality of lines extending in the right-left direction or the front-rear direction of the footwear 100 or a plurality of dots, or may have a shape in which a drawing or a sign appear. By thus embossing the lower surface 22 of the synthetic rubber portion 20, the footwear 100 provides the slip resistance effect during use. Note that whether the lower surface 22 of the synthetic rubber portion 20 is embossed is optional. When the embossing process is not performed, the lower surface 22 may be, for example, a plane or a curved surface or may have a groove, a wave shape, or the like.

The synthetic rubber portion 20 is integrally formed by synthetic rubber. The synthetic rubber constituting the synthetic rubber portion 20 is artificial rubber manufactured from, for example, petroleum and naphtha. For example, as the synthetic rubber, silicon rubber, acrylic rubber, and urethane rubber are used. A specific gravity of the synthetic rubber portion 20 is set to be 1.03 g/cm³.

Note that the synthetic rubber portion 20 is not limited to have the above-described shapes. For example, the synthetic rubber portion 20 may have a block shape instead of the plate shape, and may be a plate-shaped member approximately perpendicular to the bottom surface of the footwear 100. In this case, as described above, the depressed portion 11b is formed in the shape according to the shape of such a synthetic rubber portion 20. For example, when the synthetic rubber portion 20 has the plate shape approximately perpendicular to the bottom surface of the footwear 100, the depressed portion 11b is formed in the groove shape into which the plate-shaped synthetic rubber portion 20 is insertable from its width direction (the direction perpendicular to the thickness direction), and one end surface in the width direction of the synthetic rubber portion 20 is embossed.

The above-described footwear 100 is the footwear for wrapping the entire foot that includes the main body 30 (see Fig. 6(a)) made of foam rubber. The main body 30 is dug to embed the synthetic rubber into the heel side of the bottom 31 of the main body 30 made of the foam rubber. The embedded part is a part from the center T between the toe and the heel to the heel part of the bottom 31 of the main body 30. The specific gravities of the foam rubber portion 10 and the synthetic rubber portion 20 are 0.38 g/cm³ and 1.03 g/cm³, respectively. The position of the center of gravity of the footwear 100 is shifted to the heel portion 14 side using a difference in the specific gravity of both to increase stability such that the footwear 100 does not fall over toward the toe portion 13 side when the footwear 100 is placed upside down. Further, the opening of the footwear is formed to be flat with respect to the ground surface C when the footwear 100 is placed upside down.

When the footwear 100 is placed upside down, the opening end surface 15 abuts on the ground surface C so as to close the internal space 2 and the footwear 100 is in the stable state without falling over. In view of this, placing the footwear 100 upside down outdoor by a user without use of, for example, a storage box allows reliably avoiding invasion of rain and dust into the internal space 2 beforehand. Accordingly, with the footwear 100, while the user does not use the footwear 100, only placing the footwear 100 upside down allows easily and reliably avoiding wetting and dirtying an inner surface 2a (see Fig. 2(b)) of the footwear 100. Eventually, this eliminates the need for a labor, such as wiping and drying the inner surface 2a each time the footwear 100 is used.

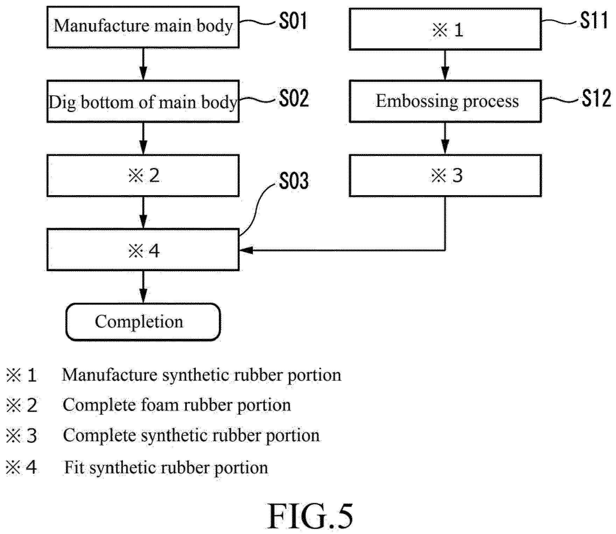

Next, an example of a method for manufacturing the footwear 100 will be described with reference to the drawings. Fig. 5 is a flowchart for describing an example of the method for manufacturing the footwear 100. Fig. 6 is a drawing for describing a part of steps of the manufacturing process of the footwear 100, Fig. 6(a) is a cross-sectional view illustrating the main body 30, Fig. 6(b) is a cross-sectional view illustrating the foam rubber portion 10, and Fig. 6(c) is a cross-sectional view illustrating the foam rubber portion 10 and the synthetic rubber portion 20. Note that the respective cross-sectional views of Fig. 6(a) to Fig. 6(c) are cross-sectional views along the line equivalent to the line A-A in Fig. 2(a). The following describes an example of the method for manufacturing the footwear 100 based on the flowchart in Fig. 5.

As illustrated in Fig. 5, the main body 30 is manufactured (Step S01). Here, as illustrated in Fig. 6(a), the main body 30 has the configuration identical to the foam rubber portion 10 excluding a point that the depressed portion 11b is not disposed in a lower surface 31.

This step is performed by, for example, injection molding. In this step, first, a mold (for example, a metal mold) having the shape of the main body 30 is prepared, and then a molten resin injected into the mold to fill the form. Afterwards, the mold is removed. Thus, the main body 30 made foam rubber having a void structure is manufactured.

Next, the bottom 31 of the main body 30 is dug (Step S02).

In this step, as illustrated in Fig. 6(b), a predetermined region of the bottom 31 of the main body 30 is dug to form the depressed portion 11b. The digging step of the bottom 31 is performed by mechanical processing, such as a cutting work, and processing, such as addition of heat, a medical product, or the like for melting and removal. In view of this, the foam rubber portion 10 as illustrated in Fig. 6(b) is completed.

Additionally, separately from the above-described Step S01 and Step S02, a synthetic rubber main body (not illustrated) is manufactured (Step S11). Here, the synthetic rubber main body has the configuration identical to the synthetic rubber portion 20 excluding a point that the above-described embossing process is not performed on the lower surface 22. That is, the synthetic rubber main body is equivalent to the synthetic rubber portion 20 before being embossed.

This step is performed by, for example, injection molding. In this step, first, a mold (for example, a metal mold) having the shape of the synthetic rubber main body is prepared, and then a molten resin injected into the mold to fill the form. Afterwards, the mold is removed. Thus, the synthetic rubber main body is manufactured.

Further, continuous with Step S11, an embossing process is performed (Step S12). In this step, a surface that will become the lower surface 22 of the synthetic rubber portion 20 in the synthetic rubber main body is embossed. Here, for example, the embossing process is performed by processing, such as removal of a region excluding a part becoming the plurality of grid-like projecting portions 23 in the surface 22. Through the above-described Step S 11 and Step S12, the synthetic rubber portion 20 is manufactured and prepared.

Note that the above-described Step S11 and Step S12 may be performed simultaneously with the steps of Step S01 and Step S02 concurrently, or may be performed in a period before and after the steps of Step S01 and Step S02.

Subsequently, the synthetic rubber portion 20 is fitted to the foam rubber portion 10 (Step S03).

In this step, as illustrated in Fig. 6(c),the synthetic rubber portion 20 is fitted to the depressed portion 11b of the foam rubber portion 10. Then, the synthetic rubber portion 20 is joined to the foam rubber portion 10. In this respect, an adhesive may be disposed between the depressed portion 11b and the synthetic rubber portion 20 so as to be mutually bonded via the adhesive.

The footwear 100 is completed by the above-described steps.

The above-described manufacturing method uses the method for manufacturing the footwear 100 that wraps the entire foot and is allowed to be placed upside down to avoid the inside of the footwear 100 to get dirty with rain and dust. The method includes: a step of manufacturing the main body 30 having the shape in which the opening 1 of the footwear 100 becomes flat with the foam rubber having the specific gravity of 0.38 g/cm³; subsequently, a step of digging the part from the center T between the toe and the heel to a heel portion 14 as the part of the bottom 31 of the main body 30 manufactured with the foam rubber; and subsequently, a step of fitting the synthetic rubber having the specific gravity of 1.03 g/cm³ in the dug depressed portion (the groove)11b. The center of gravity of the footwear 100 is set in the heel side using the difference in the specific gravity. The manufacturing method allows easily manufacturing the footwear 100.

Note that the footwear 100 is not limited to be manufactured by the above-described method, but may be manufactured by, for example, the following method. That is, in the above-described method for manufacturing the footwear 100, the main body 30 is manufactured (Step S01), and then the depressed portion 11b is formed on the main body 30 (Step S02) to manufacture the foam rubber portion 10. Instead of these steps, a mold having a shape of the foam rubber portion 10 having a shape corresponding to the depressed portion 11b may be prepared, and the foam rubber portion 10 may be manufactured by injection molding using the mold. In the above-described method for manufacturing the footwear 100, the synthetic rubber main body is manufactured (Step S11), and after that the embossing process is performed (Step S12). Instead of this, a mold having a shape of the synthetic rubber portion 20 having a shape after an embossing process may be prepared, and the synthetic rubber portion 20 may be manufactured by injection molding using the mold.

Subsequently, modifications of the above-described footwear 100 are described with reference to the drawings. In the following description, a component that is identical or similar to that of the embodiment is indicated by the identical reference numeral, and the description thereof is omitted or simplified. Note that methods for manufacturing footwears 200, 300, 400, and 500 according to the modifications described below are similar to the method for manufacturing the footwear 100 described above.

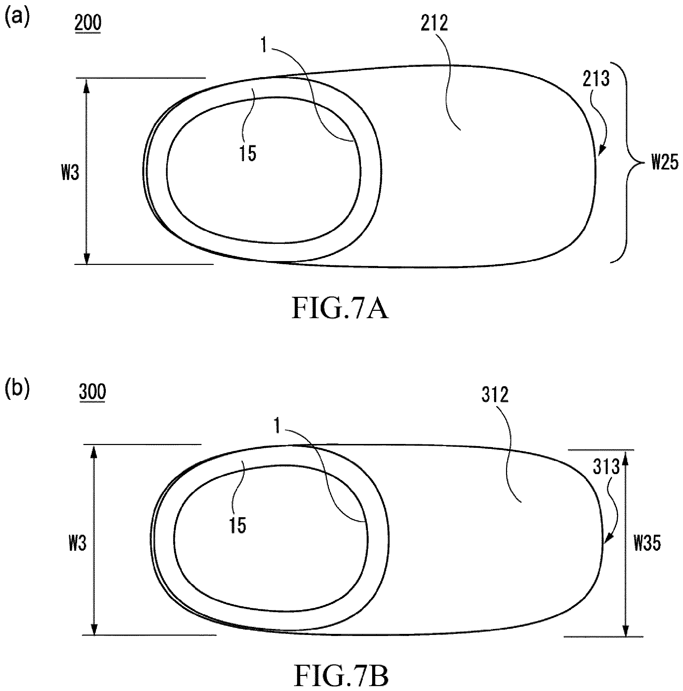

With the footwear 100 according to the above-described embodiment, the width W3 in the right-left direction of the opening end surface 15 is configured to be larger than the width W5 in the right-left direction of the upper portion 12 and the toe portion 13. However, the configuration is not limited to this, and the following configuration is also possible. Fig. 7(a) is a plan view illustrating the footwear 200 according to a first modification, and Fig. 7(b) is a plan view illustrating the footwear 300 according to a second modification. The footwear 200 or 300 illustrated in Fig. 7 has the configuration identical to the above-described footwear 100 except for the configuration of the width in the right-left direction. As illustrated in Fig. 7(a), in the footwear 200, the width W3 in the right-left direction of the opening end surface 15 is configured to be smaller (narrower) than a width W25 in the right-left direction of an upper portion 212 and a toe portion 213. Further, as illustrated in Fig. 7(b), in the footwear 300, the width W3 in the right-left direction of the opening end surface 15 is configured to have a length identical to a width W35 in the right-left direction of an upper portion 312 and a toe portion 313. Since the footwear 200 or 300 also has the opening end surface 15 as the above-described inclined surface, similarly to the footwear 100 according to the embodiment, the footwear 200 or 300 can be in the stable state even placed upside down.

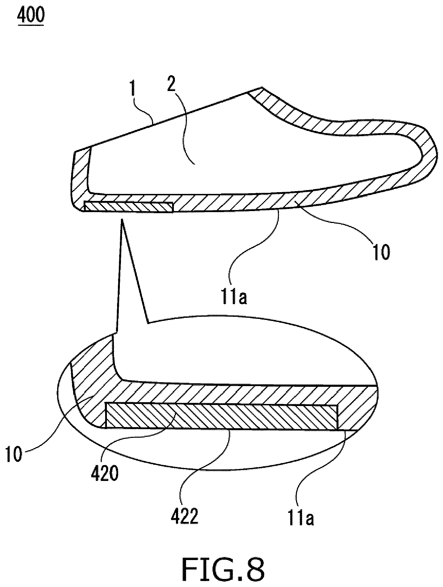

With the above-described footwear 100 according to the embodiment, the lower surface 22 of the synthetic rubber portion 20 projects downward from the lower surface 11a of the foam rubber portion 10, but the following configuration is also possible. Fig. 8 is a cross-sectional view illustrating the footwear 400 according to a third modification. The drawing is a cross-sectional view along the line equivalent to the line A-A in Fig. 2(a). The footwear 400 illustrated in Fig. 8 has the configuration identical to the above-described footwear 100 except for the thickness of the synthetic rubber portion 20, and a lower surface 422 of a synthetic rubber portion 420 is formed to be flush with the lower surface 11a of the foam rubber portion 10.

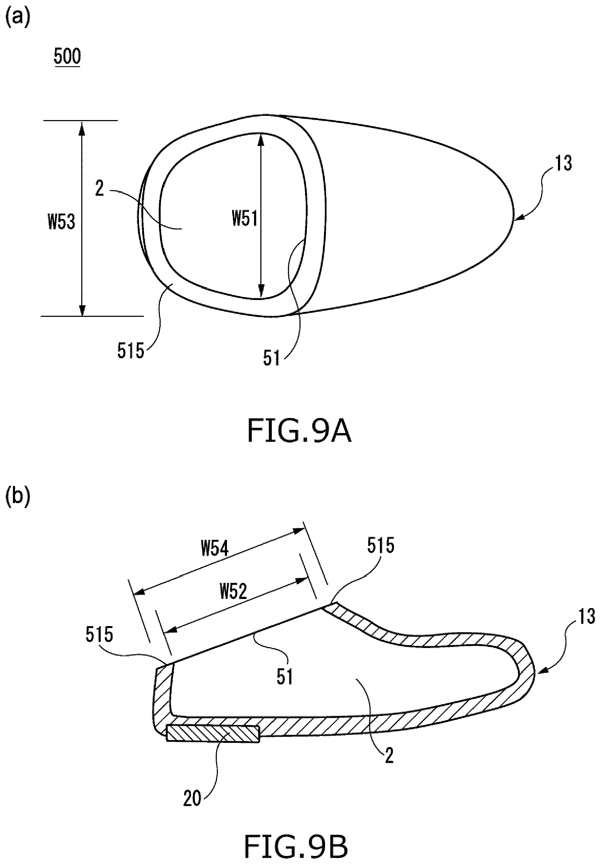

Furthermore, in the footwear 100 according to the above-described embodiment, the width W1 in the right-left direction of the opening 1 is configured to be smaller (shorter) than the width W2 in the direction perpendicular to the direction of the width W1, and the width W3 in the right-left direction of the opening end surface 15 is configured to be smaller (narrower) than the width W4 in the direction perpendicular to the direction of the width W3, but the following configuration is also possible. Fig. 9 illustrates the footwear 500 according to a fourth modification, Fig. 9(a) illustrates a plan view, and Fig. 9(b) is a cross-sectional view along the line equivalent to the line A-A in Fig. 2(a). The footwear 500 illustrated in Fig. 9 has the configuration identical to the above-described footwear 100 except for the configuration of the opening 1 and the opening end surface 15. With the footwear 500, a width W51 in a right-left direction of an opening 51 is configured to be larger (longer) than a width W52 in a direction perpendicular to the direction of the width W51, and a width W53 in the right-left direction of an opening end surface 515 is configured to be larger (wider) than a width W54 in a direction perpendicular to the direction of the width W53. Like the footwear 500, the opening 1 of the footwear 100 according to the embodiment can be widened in the lateral direction (the right-left direction). The configuration of the footwear 500 allows stabilizing the footwear 500 against a side wind received by the side surface of the footwear 500. That is, with the footwear 500 according to the fourth modification, the opening 1 and the opening end surface 15 of the footwear 100 according to the embodiment are widened in the lateral direction. This allows further reliably avoiding the footwear 500 placed upside down to fall over toward the side surface side (the left side or the right side).

The width W1 in the right-left direction of the opening 1 in the footwear 100 according to the embodiment may be configured to have the length identical to the width W2 in the direction perpendicular to this, and the width W3 in the right-left direction of the opening end surface 15 may be configured to have the length identical to the width W4 in the direction perpendicular to this.

### DESCRIPTION OF REFERENCE SIGNS

- 1, 51:: Opening
- 10:: Foam rubber portion (foam rubber)
- 11:: Bottom portion of footwear
- 13, 213, 313:: Toe portion (toe)
- 14:: Heel portion (heel)
- 20:: Synthetic rubber portion (synthetic rubber)
- 30:: Main body
- 31:: Bottom of main body
- 100, 200, 300, 400, 500:: Footwear
- C:: Ground surface

## Claims

1. A footwear (100) for wrapping an entire foot, comprising
a main body (30) made of foam rubber and an embedded part (20) made of synthetic rubber, wherein
the main body is dug and configured to embed the embedded part made of synthetic rubber into a heel side (14) of a bottom of the main body made of the foam rubber,
the embedded part is a part from a mid-point from a toe to a heel to a heel part of the bottom of the main body,
specific gravities of the foam rubber and the synthetic rubber are 0.38 g/cm³ and 1.03 g/cm³, respectively,
a center of gravity of the footwear is shifted to the heel side using a difference in the specific gravity of both to increase stability such that the footwear does not fall over when the footwear is placed upside down, and
an opening (1) of the footwear is further formed to be flat with respect to a ground surface when the footwear is placed upside down.

2. The footwear according to claim 1, wherein
the opening of the footwear has a width in a right-left direction widened more than a width in a direction perpendicular to the right-left direction for stabilization against a side wind received by a side surface of the footwear.

3. The footwear according to claim 1 or claim 2, wherein
the synthetic rubber is embossed for a slip resistance.

4. A method for manufacturing footwear that wraps an entire foot and is allowed to be placed upside down to avoid an inside of the footwear to get dirty with rain and dust, the method comprising:
a step of manufacturing the footwear having an opening with a flat shape with foam rubber having a specific gravity of 0.38 g/cm³ (S01);
a step of subsequently digging a part from a mid-point from a toe to a heel to a heel part as a part of a bottom of the footwear manufactured with the foam rubber (S02); and
a step of subsequently fitting synthetic rubber having a specific gravity of 1.03 g/cm³ in a dug groove (S03), wherein
a center of gravity of the footwear is set in a heel side using a difference in the specific gravity.

## Patentansprüche

1. Schuh (100) zum Umhüllen eines ganzen Fußes, umfassend:
einen aus Schaumgummi gebildeten Hauptkörper (30) und einen eingebetteten Teil (20) aus synthetischem Kautschuk, wobei
der Hauptkörper ausgehöhlt und so ausgebildet ist, dass er den eingebetteten Teil aus synthetischem Kautschuk in eine Fersenseite (14) der Unterseite des aus Schaumgummi gebildeten Hauptkörpers einbettet,
der eingebettete Teil ein Teil ab etwa einem Mittelpunkt von einer Zehe zur Ferse bis zu einem Fersenteil der Unterseite des Hauptkörpers ist,
die spezifischen Gewichte des Schaumgummis und des synthetischen Kautschuks 0,38 g/cm³ und 1,03 g/cm³ sind,
der Schwerpunkt des Schuhs zur Fersenseite verlagert ist, wobei der Unterschied der spezifischen Gewichte beider Materialien ausgenutzt wird, um die Stabilität zu erhöhen, sodass der Schuh nicht umkippt, wenn der Schuh auf den Kopf gestellt wird/ist, und
weiterhin eine Öffnung (1) des Schuhs flach in Bezug auf eine Bodenoberfläche ausgebildet ist, wenn der Schuh auf den Kopf gestellt ist.

2. Schuh nach Anspruch 1, wobei
die Öffnung des Schuhs zwecks einer Stabilisierung gegen Seitenwind, der von einer seitlichen Oberfläche des Schuhs aufgenommen wird, in einer Rechts-Links-Richtung breiter ist als in einer Richtung senkrecht zur Rechts-Links-Richtung.

3. Schuh nach Anspruch 1 oder Anspruch 2, wobei
der synthetische Kautschuk für Rutschfestigkeit geprägt ist.

4. Verfahren zur Herstellung eines einen ganzen Fuß umhüllenden Schuhs, welcher auf den Kopf gestellt werden kann, um zu verhindern, dass das Innere des Schuhs durch Regen und Staub verschmutzt wird, umfassend:
einen Schritt der Herstellung des eine Öffnung mit einer flachen Form aufweisenden Schuhs mit Schaumgummi mit einem spezifischen Gewicht von 0,38 g/cm³ (S01);
einen Schritt des anschließenden Aushöhlens eines Teils ab einem Mittelpunkt von einer Zehe zu einer Ferse bis zu einem Fersenteil als Teil der Unterseite des mit dem Schaumgummi hergestellten Schuhs (S02);
und einen Schritt des anschließenden Einpassens von Synthesekautschuk mit einem spezifischen Gewicht von 1,03 g/cm³ in eine ausgehöhlte Vertiefung (S03), wobei
der Schwerpunkt des Schuhs unter Ausnutzung des Unterschieds des spezifischen Gewichts zur Fersenseite gelegt wird.

## Revendications

1. Article chaussant (100) pour envelopper un pied entier, comprenant
un corps principal (30) fait de caoutchouc mousse et une partie incorporée (20) faite de caoutchouc synthétique, dans lequel le corps principal est creusé et configuré pour incorporer la partie incorporée faite de caoutchouc synthétique dans un côté talon (14) d'une partie inférieure du corps principal fait du caoutchouc mousse,
la partie incorporée est une partie d'un point médian d'un orteil à un talon jusqu'à une partie talon de la partie inférieure du corps principal,
les masses volumiques du caoutchouc mousse et du caoutchouc synthétique sont de 0,38 g/cm³ et de 1,03 g/cm³, respectivement,
un centre de gravité de l'article chaussant est décalé vers le côté talon en utilisant une différence de masse volumique des deux pour augmenter la stabilité de telle manière que l'article chaussant ne tombe pas lorsque l'article chaussant est placé à l'envers, et
une ouverture (1) de l'article chaussant est en outre formée pour être plate par rapport à une surface du sol lorsque l'article chaussant est placé à l'envers.

2. Article chaussant selon la revendication 1, dans lequel l'ouverture de l'article chaussant a une largeur dans une direction droite-gauche davantage élargie qu'une largeur dans une direction perpendiculaire à la direction droite-gauche pour une stabilisation contre un vent latéral reçu par une surface latérale de l'article chaussant.

3. Article chaussant selon la revendication 1 ou la revendication 2, dans lequel
le caoutchouc synthétique est gaufré pour une résistance au glissement.

4. Procédé de fabrication d'un article chaussant qui enveloppe un pied entier et peut être placé à l'envers pour éviter à un intérieur de l'article chaussant d'être sali par la pluie et la poussière, le procédé comprenant :
une étape de fabrication de l'article chaussant ayant une ouverture de forme plate avec un caoutchouc mousse ayant une masse volumique de 0,38 g/cm³ (S01) ;
une étape de creusement ultérieur d'une partie d'un point médian d'un orteil à un talon jusqu'à une partie talon en tant que partie d'une partie inférieure de l'article chaussant fabriqué avec le caoutchouc mousse (S02) ; et
une étape d'ajustement ultérieur de caoutchouc synthétique ayant une masse volumique de 1,03 g/cm³ dans une rainure (S03) creusée, dans lequel
un centre de gravité de l'article chaussant est disposé dans un côté talon en utilisant une différence de masse volumique.
